# EUROPEAN PATENT SPECIFICATION

(11) **EP 4 066 616 B1**
(45) Date of publication and mention of the grant of the patent: **10.09.2025**
(21) Application number: 21210569.6
(22) Date of filing: 25.11.2021
(51) Int. Cl.: A01D 34/64, A01D 34/66

(54) **MOWER UNIT**
MÄHEREINHEIT
UNITÉ TONDEUSE

(30) Priority: 01.04.2021 JP 2021062832
(43) Date of publication of application: 05.10.2022
(73) Proprietor: Kubota Corporation, Osaka-shi, Osaka 556-8601 (JP)
(72) Inventor: YAMADA, Masahiro, Sakai-shi, Osaka, 5900823 (JP); ITO, Hirokazu, Sakai-shi, Osaka, 5900823 (JP); ODAGIRI, Makoto, Sakai-shi, Osaka, 5900823 (JP)
(74) Representative: Cabinet Beau de Loménie

(56) References cited:
- US-A- 5 836 144
- US-A1- 2017 013 780
- US-A1- 2019 124 837
- US-A1- 2020 359 565
- US-B2- 10 306 833
- US-B2- 9 730 383

## Description

### Technical Field

The present invention relates to a mower unit attachable to a tractor or a dedicated travel vehicle for cutting grass.

### Background Art

A mower unit may receive power for rotating mower blades from an engine (see Patent Literature 1) or an electric motor (see Patent Literature 2). With either configuration, the mower unit includes, as a belt power transmission mechanism for transmitting power from the driving source to the blades, a single power transmission belt for a simple structure. The power transmission belt for this arrangement is wound around components in such a manner as to include portions extending over and intersecting with one another. This allows a single power transmission belt to rotate three blades. US 10306833 B2 deals with a mower deck with three-dimensional single belt transmission.

### Citation List

Patent Document 1
   U.S. Patent No. 10,306,833
Patent Document 2
   U.S. Patent No. 10,485,175

### Summary of Invention

### Technical Problem

The mower units disclosed in Patent Literatures 1 and 2, each of which includes a belt including portions extending over and intersecting with one another, each have a large height. Thus, in a case where either of the mower units is suspended from the body and capable of being lifted and lowered, the mower unit will have a small lifting/lowering stroke. Further, the mower unit disclosed in Patent Literature 2 includes an electric motor as its power source, and is thus heavier than the mower unit disclosed in Patent Literature 1, whose power source is an engine. A mower unit including more than three blades is particularly heavy as it requires not only a larger electric motor but also more inverters for controlling how the electric motor is driven. In addition, a power transmission belt wound around components in a complicated manner (that is, in such a manner as to include portions extending over and intersecting with one another) leads to a heavier and bulkier belt power transmission mechanism. This issue may be solved by reducing the number of blades to two, but a mower unit including two blades will have a small grass-cutting width.

In view of the above circumstances, the present invention provides a compact mower unit that includes at least three blades and that is simplified in configuration.

### Solution to Problem

A mower unit of the present invention is defined in claim 1 and includes: a mower deck including a top plate and a side wall; an electric motor provided for the mower deck and including an output shaft; at least three blade units; and a wind-around power transmission mechanism configured to transmit power from the electric motor to the blade units, the blade units each include: a blade inside the mower deck; and a blade shaft including a lower portion to which the blade is attached and an upper portion protruding upward from the top plate, and the wind-around power transmission mechanism includes: an output pulley provided for the output shaft of the electric motor; three input pulleys each provided for the upper portion of a corresponding one of the blade shafts; and a single power transmission band wound around the output pulley and the input pulleys and configured to run on a base plane parallel to the top plate.

The above mower unit includes a wind-around power transmission mechanism configured to transmit power from an electric motor provided for a mower deck to the input pulley of each blade unit to rotate at least three blades. The wind-around power transmission mechanism includes a single power transmission band wound around the output pulley and all the input pulleys and configured to run on a base plane parallel to the top plate. The power transmission band is thus substantially not displaceable in the up-down direction. This allows the wind-around power transmission mechanism to have a simple structure and a small height. Thus, in a case where the mower deck is suspended from the body and capable of being lifted and lowered, the mower unit has a large lifting/lowering stroke. Further, the above configuration allows the wind-around power transmission mechanism to be lightweight. This allows the mower deck to be lifted and lowered easily. The term "power transmission band" collectively refers to components such as a power transmission belt (including a timing belt) and a chain.

The wind-around power transmission mechanism is preferably wound around not only the output pulley and the input pulleys but also auxiliary pulleys for holding the power transmission band for its smooth running over the output pulley and the input pulleys. In view of that, the present invention further includes a plurality of auxiliary pulleys disposed in contact with (that is, wound around) the power transmission band and arranged on the base plane. With this configuration, the plurality of auxiliary pulleys are also arranged on the base plane, and thus do not reduce the lifting/lowering stroke of the mower deck as a result of the wind-around power transmission mechanism having a larger height.

Applying an appropriate tension to the power transmission band preferably involves use of a tension pulley. Causing the power transmission band to run stably preferably involves use of an idler pulley. In view of that, the present invention may be arranged such that the plurality of auxiliary pulleys includes a tension pulley and an idler pulley.

The wind-around power transmission mechanism occupies a space in a plan view which space is defined by the respective positions of the output pulley, the input pulleys, and the auxiliary pulleys. The position of the output pulley depends on the position of the output shaft of the electric motor. The respective positions of the input pulleys each depend on the position of the corresponding blade. Appropriately selecting the respective positions of the auxiliary pulleys allows the wind-around power transmission mechanism to occupy only a small space in a plan view. Specifically, arranging the auxiliary pulleys within the occupation space defined by the respective positions of the output shaft and the input shafts advantageously allows the wind-around power transmission mechanism to occupy a reduced space. In view of that, the present invention is arranged such that the output pulley and the input pulleys are in contact with an inner surface of the power transmission band, and the plurality of auxiliary pulleys are in contact with an outer surface of the power transmission band in such a manner as to press the power transmission band inward.

### Brief Description of Drawings

Fig. 1 is a side view of a mower including a mower unit.
Fig. 2 is a plan view of a mower.
Fig. 3 is a perspective view of a mower unit.
Fig. 4 is a plan view of a mower unit.
Fig. 5 is a side view of a mower unit.
Fig. 6 is a diagram schematically illustrating an example arrangement of a belt and pulleys.
Fig. 7 is a diagram schematically illustrating another example arrangement of a belt and pulleys.

### Description of Embodiments

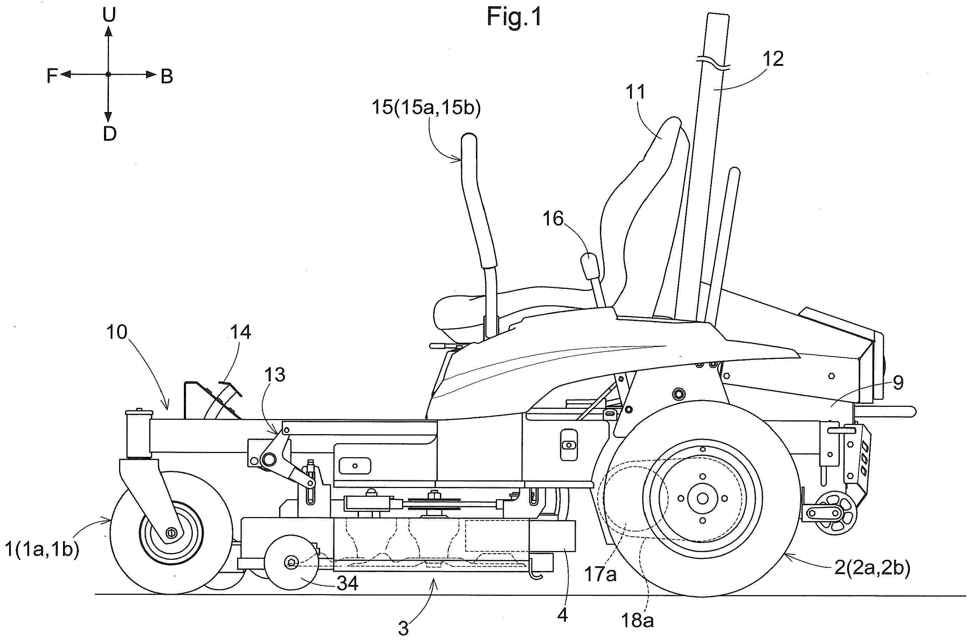

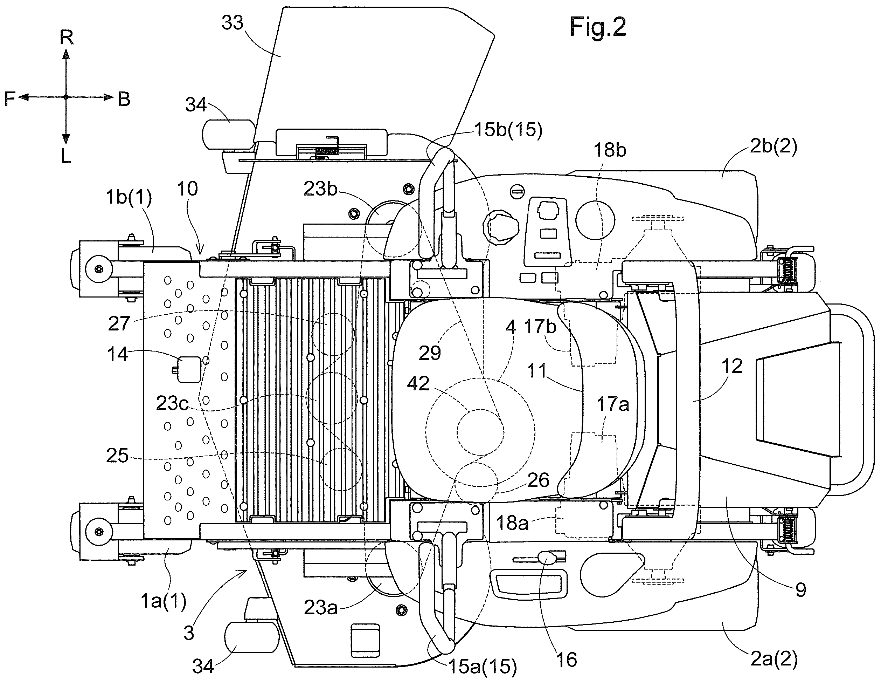

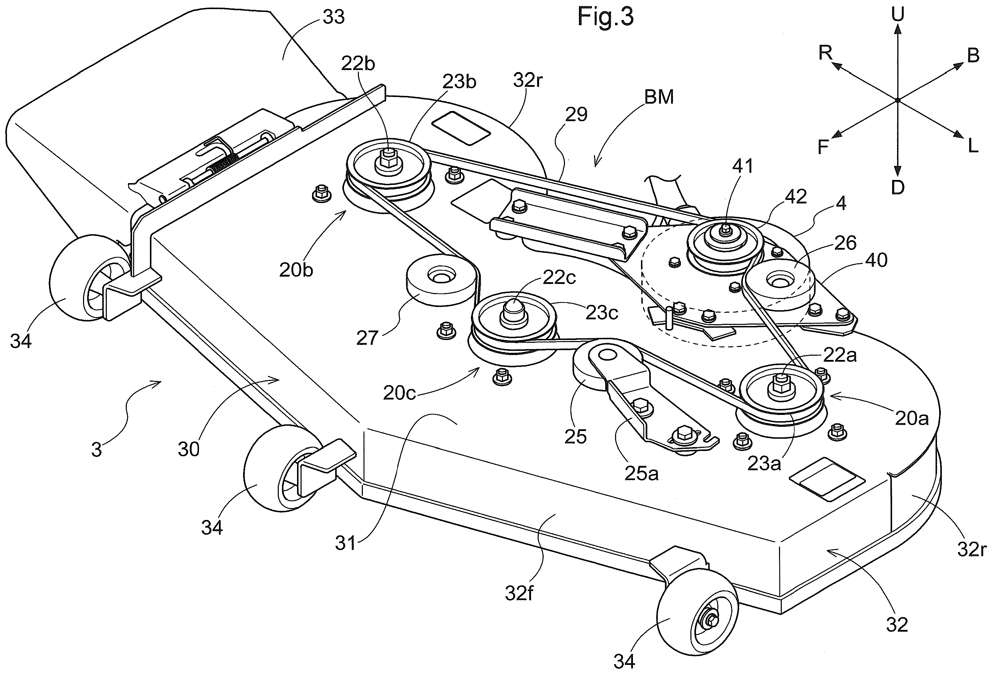

The description below deals with a mower including a mower unit 3 as an embodiment of the present invention with reference to drawings. Fig. 1 is a side view of a mid-mount, riding-type electric mower as an example mower. Fig. 2 is a plan view of the mower. Fig. 3 is a perspective view of the mower unit. The description below of the present embodiment refers to directions related to the mower and the mower unit 3 as follows: arrow F shown in Figs. 1, 2, and 3 indicates the forward direction of the mower; arrow B shown in the same drawings indicates the backward direction of the mower; arrow L shown in Figs. 2 and 3 indicates the leftward direction of the mower; arrow R shown in the same drawings indicates the rightward direction of the mower; arrow U shown in Figs. 1 and 3 indicates the upward direction of the mower; and arrow D shown in the same drawings indicates the downward direction of the mower.

The mower includes a front wheel unit 1, a driving wheel unit 2, a vehicle body 10, a battery 9, a driver's seat 11, a roll-over protection frame 12, a lifting/lowering mechanism 13, and a mower unit 3. The front wheel unit 1 includes a left front wheel 1a and a right front wheel 1b each in the form of a freely rotatable caster. The driving wheel unit 2 includes a left rear wheel 2a and a right rear wheel 2b. The vehicle body 10 is supported by the front wheel unit 1 and the driving wheel unit 2. The battery 9 is at a back portion of the vehicle body 10. The driver's seat 11 is forward of the battery 9. The roll-over protection frame 12 stands behind the driver's seat 11. The lifting/lowering mechanism 13 is in the form of a lifting/lowering link mechanism. The mower unit 3 is disposed in a space under the vehicle body 10 and between the front wheel unit 1 and the driving wheel unit 2. The mower unit 3 is suspended from the vehicle body 10 in such a manner as to be capable of being lifted and lowered by means of the lifting/lowering mechanism 13.

The mower further includes a brake pedal 14, a steering unit 15, and a mower unit lifting/lowering lever 16. The brake pedal 14 protrudes from a floor plate disposed in front of the driver's seat 11 for the driver to place their feet on. The steering unit 15 includes a left steering lever 15a and a right steering lever 15b disposed on opposite sides of the driver's seat 11 and swingable about a horizontal swing axis in the transverse direction of the vehicle body. The mower unit lifting/lowering lever 16 is near the driver's seat 11.

The mower further includes a left travel motor 17a, a right travel motor 17b, a left transmission 18a, and a right transmission 18b. The left travel motor 17a is disposed on the vehicle body 10 and configured to transmit a driving power through the left transmission 18a to the left rear wheel 2a to rotate the left rear wheel 2a. The right travel motor 17b is disposed on the vehicle body 10 and configured to transmit a driving power through the right transmission 18b to the right rear wheel 2b to rotate the right rear wheel 2b. The left travel motor 17a and the right travel motor 17b have respective rotational speeds that are each independently changeable on the basis of the amount of electric power supplied through an inverter control unit (not illustrated in the drawings). This allows the left rear wheel 2a and the right rear wheel 2b to have respective rotational speeds different from each other. The difference between the respective rotational speeds of the left and right rear wheels in turn causes the mower to change direction.

The mower unit 3 is, as illustrated in Figs. 3, 4, and 5, a three-blade mower unit of a side discharge type, and includes a mower deck 30. The mower deck 30 includes a substantially flat top plate 31 and a side wall 32 extending downward from the periphery of the top plate 31. The top plate 31 and the side wall 32 define a closed space for cutting grass. The side wall 32 includes (i) a front side wall portion 32f extending downward from the front edge of the top plate 31 and (ii) a rear side wall portion 32r extending downward from the back edge of the top plate 31. The side wall 32 is open at its right end to serve as a mown grass discharge port. The mown grass discharge port is provided with a discharge port cover 33. The mower deck 30 includes auxiliary wheels 34.

The mower unit 3 includes a left blade unit 20a, a right blade unit 20b, and a central blade unit 20c (which are an example of the "blade units" for the present invention) attached to the top plate 31. The left blade unit 20a and the right blade unit 20b are on an identical transverse line of the mower, whereas the central blade unit 20c is offset forward of the left blade unit 20a and the right blade unit 20b.

Each blade unit includes a single horizontally rotatable blade. Specifically, the left blade unit 20a includes a left blade 21a inside the mower deck 30 and a left blade shaft 22a through the top plate 31. The left blade shaft 22a includes a lower portion to which the left blade 21a is attached and an upper portion which protrudes upward from the top plate 31. The right blade unit 20b includes a right blade 21b and a right blade shaft 22b configured similarly. The central blade unit 20c includes a central blade 21c and a central blade shaft 22c also configured similarly.

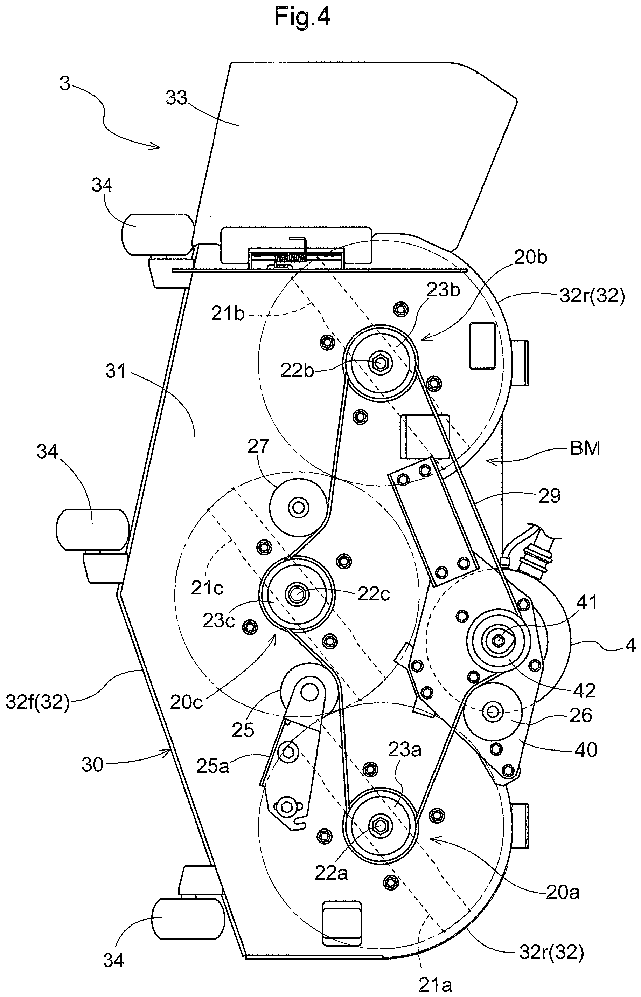

As illustrated in Fig. 4, the rear side wall portion 32r has (i) a left end region that is, in a plan view, curved in an arc along the area of rotation of the left blade 21a and (ii) a right end region that is, in a plan view, curved in an arc along the area of rotation of the right blade 21b. The rear side wall portion 32r has a central portion forward of the left and right end regions. The rear side wall portion 32r thus has a depressed space between the left and right end regions. The mower unit 3 includes, in the depressed space, an electric motor 4 including an output shaft 41, and also includes a motor attachment unit 40 including, for example, a bracket, a holding plate, and a placement plate. The electric motor 4 is fixed to the mower deck 30 with use of the motor attachment unit 40 in such an orientation that the output shaft 41 is oriented vertically and protrudes upward from the top plate 31. The electric motor 4 is contained in a housing adjacent to the rear side wall portion 32r and provided with an inverter unit (not illustrated in the drawings) attached thereto for supplying electric power to the electric motor 4.

The mower unit 3 includes a wind-around power transmission mechanism on the top plate 31 of the mower deck 30. The wind-around power transmission mechanism serves to transmit power from the electric motor 4 to the left blade unit 20a, the right blade unit 20b, and the central blade unit 20c. The wind-around power transmission mechanism for the present embodiment is a belt power transmission mechanism BM including a power transmission belt 29 (which is an example of the "power transmission band" for the present invention).

The belt power transmission mechanism BM includes an output pulley 42 provided for the output shaft 41 of the electric motor 4, a left input pulley 23a provided for an upper portion of the left blade shaft 22a, a right input pulley 23b provided for an upper portion of the right blade shaft 22b, and a central input pulley 23c provided for an upper portion of the central blade shaft 22c. The power transmission belt 29 is wound around the output pulley 42, the left input pulley 23a, the right input pulley 23b, and the central input pulley 23c. The left input pulley 23a, the right input pulley 23b, and the central input pulley 23c thus serve to rotate the three blades. The power transmission belt 29 has a back surface (inner surface) in contact with the output pulley 42, the left input pulley 23a, the right input pulley 23b, and the central input pulley 23c.

The belt power transmission mechanism BM further includes a plurality of auxiliary pulleys around which the power transmission belt 29 is wound and which serve to improve the efficiency of the power transmission by the power transmission belt 29. The belt power transmission mechanism BM for the present embodiment includes, as such auxiliary pulleys, a single tension pulley 25 and two idler pulleys, namely, a first idler pulley 26 and a second idler pulley 27. The tension pulley 25 is rotatably attached to an end portion of a support arm 25a swingable about a vertical axis and fixable at a desired position. The support arm 25a may be constantly urged with use of a spring to constantly cause the tension pulley 25 to press the power transmission belt 29. The first idler pulley 26 and the second idler pulley 27 are each attached to the top plate 31 of the mower deck 30 in such a manner as to be rotatable about a shaft on the top plate 31.

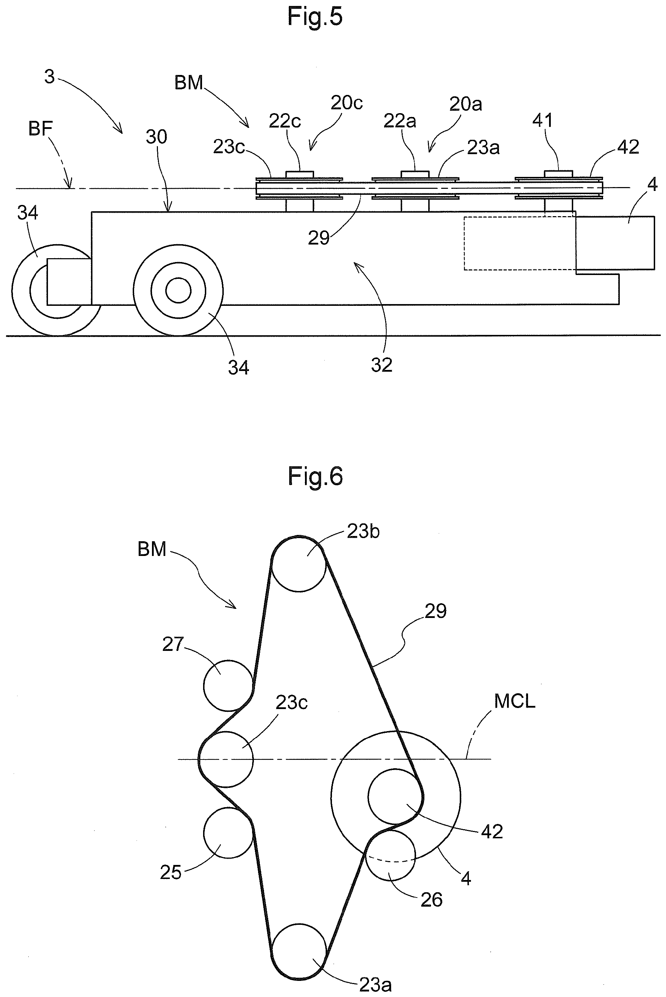

As illustrated in Figs. 3 and 4, the tension pulley 25, the first idler pulley 26, and the second idler pulley 27 are in contact with the front surface (outer surface) of the power transmission belt 29 in such a manner as to press the power transmission belt 29 toward the center of the loop of the power transmission belt 29. The power transmission belt 29 is thus curved inward at a portion between the output pulley 42 and the left input pulley 23a, a portion between the central input pulley 23c and the left input pulley 23a, and a portion between the central input pulley 23c and the right input pulley 23b. This allows the belt power transmission mechanism BM to be compact. Further, as illustrated in Fig. 5, the following pulleys are substantially on a base plane BF parallel to the top plate 31 of the mower deck 30: the output pulley 42, the left input pulley 23a, the central input pulley 23c, the right input pulley 23b, the tension pulley 25, the first idler pulley 26, and the second idler pulley 27. The belt power transmission mechanism BM thus has a significantly small height above the top plate 31. The power transmission belt 29 also extends on the base plane BF. This allows the power transmission belt 29 to be close to the top plate 31, and its horizontal running to be stable and without displacement.

### [Alternative examples]

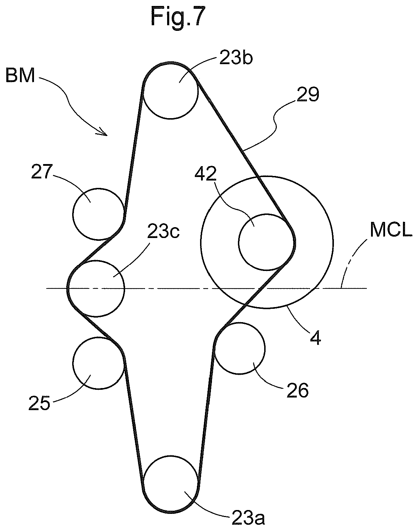

(1) The example described above is arranged such that as illustrated in Fig. 6, the electric motor 4 (in other words, the output pulley 42) has its center to the left of the front-back center line MCL of the mower deck 30 in a plan view. The front-back center line MCL of the mower deck 30 is a line extending in the front-back direction of the vehicle body 10 and passing through the center of the central input pulley 23c. The present invention may alternatively be arranged such that as illustrated in Fig. 7, the electric motor 4 has its center to the right of the front-back center line MCL of the mower deck 30. The two embodiments are identical to each other in terms of the arrangement of the left input pulley 23a, the central input pulley 23c, the right input pulley 23b, the tension pulley 25, the first idler pulley 26, and the second idler pulley 27. The electric motor 4 (output pulley 42) may thus be selectively positioned to the left of, to the right of, or on the front-back center line MCL as appropriate without changing the arrangement of the other members of the belt power transmission mechanism BM. This allows various other members of the mower to be easily placed without overlapping with the electric motor 4 (output pulley 42).
(2) The example described above is an example mower unit 3 including three blades. The mower unit 3 may alternatively include four or more blades arranged next to one another. Such an alternative embodiment is substantially similar in configuration to the embodiment described above: The pulleys and the power transmission belt 29 are on the base plane BF.
(3) The example described above is a mower unit 3 disposed between a front wheel unit 1 and a driving wheel unit 2 (rear wheel unit) to provide a mid-mount mower. The mower unit 3 may alternatively be forward of the front wheel unit 1 for a front mower type.
(4) The example described above is an example related to a zero-turn vehicle including a driving wheel unit 2 with a left rear wheel 2a and a right rear wheel 2b that are independently drivable. Alternatively, the left rear wheel 2a and the right rear wheel 2b may be connected to each other with use of a differential mechanism to provide a vehicle including a front wheel unit 1 with wheels for steering the vehicle.

### Industrial Applicability

The present invention is applicable to any mower including a wind-around power transmission mechanism to transmit power from an electric motor to blade units.

## Claims

1. A mower unit (3), comprising:
a mower deck (30) including a top plate (31) and a side wall (32);
an electric motor (4) provided for the mower deck (30) and including an output shaft (41);
at least three blade units (20a, 20b, 20c) ; and
a wind-around power transmission mechanism (BM) configured to transmit power from the electric motor (4) to the blade units (20a, 20b, 20c),
wherein:
the blade units (20a, 20b, 20c) each include:
a blade inside the mower deck (30); and
a blade shaft (22a, 22b, 22c) including a lower portion to which the blade is attached and an upper portion protruding upward from the top plate (31), and
the wind-around power transmission mechanism (BM) includes:
an output pulley (42) provided for the output shaft (41) of the electric motor (4); and
three input pulleys (23a, 23b, 23c) each provided for the upper portion of a corresponding one of the blade shafts (22a, 22b, 22c); **characterized in that**:
the wind-around power transmission mechanism (BM) includes a single power transmission band (29) wound around the output pulley (42) and the input pulleys (23a, 23b, 23c) and configured to run on a base plane (BF) parallel to the top plate (31), and **in that**
the mower unit comprises a plurality of auxiliary pulleys (25, 26, 27) disposed in contact with the power transmission band (29) and arranged on the base plane (BF),
wherein the output pulley (42) and the input pulleys (23a, 23b, 23c) are in contact with an inner surface of the power transmission band (29), and
the plurality of auxiliary pulleys (25, 26, 27) are in contact with an outer surface of the power transmission band (29) in such a manner as to press the power transmission band (29) inward.

2. The mower unit (3) according to claim 1, wherein:
the plurality of auxiliary pulleys includes a tension pulley (25) and an idler pulley (26).

## Patentansprüche

1. Mäheinheit (3), Folgendes umfassend:
ein Mäherdeck (30), das eine obere Platte (31) und eine Seitenwand (32) beinhaltet,
einen Elektromotor (4), der für das Mäherdeck (30) bereitgestellt ist und eine Abtriebswelle (41) beinhaltet,
mindesten drei Messereinheiten (20a, 20b, 20c) und
einen Umschlingungsgetriebemechanismus (BM), der dafür gestaltet ist, Kraft von dem Elektromotor (4) auf die Messereinheiten (20a, 20b, 20c) zu übertragen,
wobei:
die Messereinheiten (20a, 20b, 20c) jeweils Folgendes beinhalten:
ein Messer innerhalb des Mäherdecks (30) und
eine Messerwelle (22a, 22b, 22c), die einen unteren Abschnitt beinhaltet, an dem das Messer angebracht ist, und einen oberen Abschnitt, der von der oberen Platte (31) aufragt, und
der Umschlingungsgetriebemechanismus (BM) Folgendes beinhaltet:
eine Abtriebsrolle (42), die für die Abtriebswelle (41) des Elektromotors (4) bereitgestellt ist, und
drei Antriebsrollen (23a, 23b, 23c), die jeweils für den oberen Abschnitt einer entsprechenden der Messerwellen (22a, 22b, 22c) bereitgestellt sind,
**dadurch gekennzeichnet, dass** der Umschlingungsgetriebemechanismus (BM) ein einzelnes Kraftübertragungsband (29) umfasst, das um die Abtriebsrolle (42) und die Antriebsrollen (23a, 23, 23c) geschlungen und dafür gestaltet ist, auf einer Grundebene (BF) parallel zu der oberen Platte (31) zu laufen, und dadurch, dass
die Mäheinheit mehrere Hilfsrollen (25, 26, 27) umfasst, die in Kontakt mit dem Kraftübertragungsband (29) positioniert und auf der Grundebene (BF) angeordnet sind,
wobei die Abtriebsrolle (42) und die Antriebsrollen (23a, 23b, 23c) in Kontakt mit einer Innenfläche des Kraftübertragungsbandes (29) stehen und
die mehreren Hilfsrollen (25, 26, 27) derart in Kontakt mit einer Außenfläche des Kraftübertragungsbandes (29) stehen, dass das Kraftübertragungsband (29) nach innen gedrückt wird.

2. Mäheinheit (3) nach Anspruch 1, wobei:
die mehreren Hilfsrollen eine Spannrolle (25) und eine Umlenkrolle (26) beinhalten.

## Revendications

1. Unité tondeuse (3) comprenant :
un plateau de coupe (30) comprenant une plaque supérieure (31) et une paroi latérale (32) ;
un moteur électrique (4) prévu pour le plateau de coupe (30) et comprenant un arbre de sortie (41) ;
au moins trois unités de lame (20a, 20b, 20c) ; et
un mécanisme de transmission de puissance par enroulement (BM) configuré pour transmettre la puissance du moteur électrique (4) aux unités de lame (20a, 20b, 20c),
dans laquelle :
les unités de lame (20a, 20b, 20c) comprennent chacune :
une lame à l'intérieur du plateau de coupe (30) ; et
un arbre de lame (22a, 22b, 22c) comprenant une partie inférieure à laquelle la lame est fixée et une partie supérieure faisant saillie vers le haut à partir de la plaque supérieure (31), et
le mécanisme de transmission de puissance par enroulement (BM) comprend :
une poulie de sortie (42) prévue pour l'arbre de sortie (41) du moteur électrique (4) ; et
trois poulies d'entrée (23a, 23b, 23c) chacune prévues pour la partie supérieure d'un arbre correspondant des arbres de lame (22a, 22b, 22c) ; **caractérisée en ce que** :
le mécanisme de transmission de puissance par enroulement (BM) comprend une seule bande de transmission de puissance (29) enroulée autour de la poulie de sortie (42) et des poulies d'entrée (23a, 23b, 23c) et configurée pour s'étendre sur un plan de base (BF) parallèle à la plaque supérieure (31), et **en ce que** :
l'unité tondeuse comprend une pluralité de poulies auxiliaires (25, 26, 27) disposées en contact avec la bande de transmission de puissance (29) et agencées sur le plan de base (BF),
dans laquelle la poulie de sortie (42) et les poulies d'entrée (23a, 23b, 23c) sont en contact avec une surface interne de la bande de transmission de puissance (29), et
la pluralité de poulies auxiliaires (25, 26, 27) sont en contact avec une surface externe de la bande de transmission de puissance (29) afin de comprimer la bande de transmission de puissance (29) vers l'intérieur.

2. Unité tondeuse (3) selon la revendication 1, dans laquelle :
la pluralité de poulies auxiliaires comprend une poulie de tension (25) et une poulie folle (26).
